# EUROPEAN PATENT APPLICATION

(11) **EP 3 462 309 A1**
(43) Date of publication of application: **03.04.2019**
(21) Application number: 17193824.4
(22) Date of filing: 28.09.2017
(51) Int. Cl.: G06F 9/44

(54) **METHOD FOR GENERATING USER INTERFACES FROM A MANUFACTURING APPLICATION MODEL**

(71) Applicant: Siemens Aktiengesellschaft, 80333 München (DE)
(72) Inventor: CEVASCO, Fabio, 16129 Genova (IT)
(74) Representative: Maier, Daniel Oliver

(57) **Abstract**

Method for generating user interfaces for applications, in particular for MES or MOM applications, the method comprising:
generating a model driven user interface module (108, 200, 308) (MDUI Module) on the basis of a MOM Application Model, said MDUI Module comprising metadata relating to generation of an user interface.

## Description

The invention relates to a method for generating user interfaces (UI) for operating applications to be employed in a system, in particular a Manufacturing Execution System (MES) or a Manufacturing Operation Management (MOM). Most recently, the term MOM is more and more used to replace the term MES.

As defined by the Manufacturing Enterprise Solutions Association (MESA International), a MES/MOM system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication."

The functions that MES/MOM systems usually include, in order to improve quality and process performance of manufacturing plants, are resource allocation and status, dispatching production orders, data collection/acquisition, quality management, maintenance management, performance analysis, operations/detail scheduling, document control, labor management, process management and product tracking.

For example, the Siemens AG offers a broad range of MES/MOM products under its SIMATIC® IT product family.

The creation of User Interfaces for MES and MOM software has always been a long, complex and costly activity, due to the high degree of customization generally required, strongly dependent on the user. As an example, UIs aimed at operators and supervisors typically require customization concerning the look and feel of screen (a dashboard or operator page), how it is displayed and in which part of the screen, and so on. On the other hand, UIs aimed at system integrators, system administrators, or people in charge of configuring an MES or MOM system and/or manage "master data", may instead be looking for a more self-consistent user experience that allows them to perform operations in a simple, intuitive and quick way.

In the latter case, while the user experience needed for different UI screens is the same, the underlying data model varies sensibly. This kind of UIs make up for a very large part of an MES or MOM project, mainly because there are a lot of different types of data to manage and configure, and the cost of creating them without using any way to generate them in bulk is directly proportional to the number of screens required. Therefore, simplifying the creation of user interfaces of this type, would reduce costs and improve the productivity in the management of an MES or MOM system.

To date, the task has been approached in the following ways. One is the use of a development framework to simplify the management of particular portions of the interfaces, such as widgets, forms, etc. This approach always implies implementing user interfaces from scratch and requires programming knowledge.

Some examples of this approach, employed e.g. within Siemens PLM (Product Lifecycle Management) include the UI Framework provided by SIMATIC IT® Unified Architecture and the "declarative UIs" that are progressively being adopted within Active Workspace.

An approach that can be defined "data-aware code scaffolding" is based on software allowing to generate boilerplate code which can be even based on existing database schema. This approach has been used in several web frameworks, such as Ruby on Rails (as also shown in the original 2005 demo of the framework) is can be useful in prototyping, however offers no real possibility to change the presentation logic of scaffolded UIs, which would be typically more complex that developing an UI from scratch; in case of code generators, the approach can be used to quickly generate boilerplate code, but it is no longer used once the code has been modified to implement specific functionalities. Those characteristics renders this approach unfeasible for production of UIs for MES or MOM systems as outlined before.

Further, the use of a WYSIWYG (what you see is what you get) editor to allow end-users assembling and configuring user interfaces by dragging and dropping predefined widgets, binding them to data sources, defining user interactions, modelling actions, etc., can dramatically reduce the time needed to implement user interfaces. However, it may become overly complex if complex interactions or data models are used. Moreover, reimplementation of pages with similar presentation logic, layout etc. is often required, and, even by copying and modifying existing screens, is not yet an optimal approach for implementing changes to existing UIs. An example of this approach in Siemens PLM, is applied in Camstar Portal Studio.

Data-driven forms software, such as Angular Dynamic Forms allows to generate UIs automatically from a data set, but is limited to the case of UIs of the kind of forms to be filled by the user and is unsuited for complex data models and when a high-level of customization is required

Domain-Driven and Model-Based User Interfaces can be generated by software such as Apache Isis, based on an underlying object model.
Apache Isis is able to generate a REST (Representational state transfer) API (Application programming interface) automatically from domain objects. However, within an MES/MOM environment there could be more tight rules in terms of what needs to be exposed publicly. It would be desirable to add the possibility of rendering user interfaces based on the existing MOM Service Layers exposed by Apps, wherein no UI-specific interfaces needed.
Apache Isis allows the user to decide where to position different elements on the interface. While this could be useful in some cases, it may cause user interfaces to become inconsistent. On the contrary, it would be desirable to leverage and enforce specific user experience policies and interaction rules, freeing the user from the responsibility of having to decide how a user interface looks like.
Apache Isis requires quite a substantial Java backend in order to run. It would be desirable to keep Model-Driven User Interfaces very lightweight and totally decoupled from the platform backend technologies to achieve total client-side single-page applications, which can be deployed on any web server and only requires access to the relevant service layers.

Some other academic tools (such as MARIAE) provide a way to implement UIs following the principles outlined by the Cameleon Reference Framework. Such framework provides a very solid conceptual strategy aimed at building different types of user interfaces starting from a domain, then moving onto a platform¬independent abstract UI and then platform-dependent end device-dependent UIs. However, in particular in the case of MES/MOM application, this approach may quickly become too complex.
Another piece of software, Metawidget, provides a way to easily generate user interfaces for domain object by inspecting an existing backend. However, this provides a very generic solution to the problem: by only inspecting the existing backend, complex user interfaces as needed by MES/MOM applications cannot be generated.

The above-mentioned problems have now been solved by a method for generating user interfaces for applications, in particular for MES or MOM applications, the method comprising:
generating a model driven user interface module (108, 200, 308) (MDUI Module) on the basis of an Application Model, through the creation and configuration of a model driven user interface manifest file (109)(MDUI Manifest) containing all information relating to the functioning of the application and all information necessary to produce a user interface The method provides a way to automate the creation of MOM-specific user interfaces (UI Applications) constituted by reusable modules (Model-Driven UI Modules, MDUI Modules) based on a MOM Application Model (App Model) containing MOM-specific metadata, created using a pre-existing embodiment.

The method also comprises the use a graphical editor allowing users to: visually inspect said MES/MOM Model, create a series of high-level logical artefacts to aid the creation of a user interface (Screens, Contents, Actions and Fields) without defining layout, placement or look and feel of UI elements, persist them to a configuration file (Model-Driven UI Manifest, MDUI Manifests); a set of runtime libraries (MDUI Runtime) able to interpret said configuration file and render the corresponding user interface elements at run time.

According to a preferred embodiment, said MDUI Module comprises one or more Model-Driven User Interface Screens (MDUI Screen), each comprising a series of Contents, which may comprise one or more Actions. In turn, Contents are comprised by one or more Fields and Actions are comprising by zero or more Fields and associated to only one Behavior.

The invention will now be better illustrated with the aid of the appended figures, of which:
- Figure 1: shows a flow diagram of a method according to the present invention;
- Figure 2: is a class diagram showing the structure and architecture of a MDUI Screen, which can be included in a MDUI Module;
- Figures 3 to 8: show schematically a series of screens displayed by a specific MDUI Editor, to generate an MDUI Manifest of an MDUI Module;
- Figure 9: shows a diagram outlining the key components of the system for performing the method of the invention, grouped by phase.

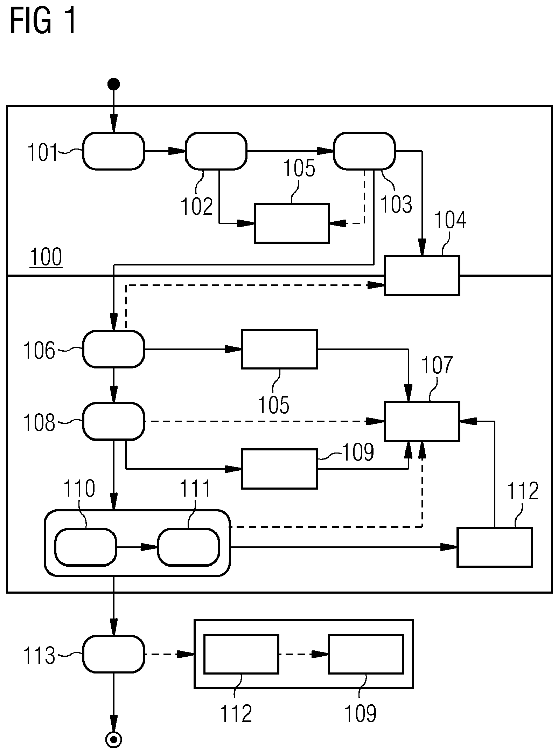

With reference to figure 1, a first phase 100 is carried out necessary to model and create part of an MOM Solution, including its MOM Model, business logic, and service layer. This can be done by a suitable platform e.g. SIMATIC® IT UA Project Studio, the user interface that is used to define the Public Object Model (POM) of an MES or MOM Application. The POM is comprised of different artefacts, such as the following.
Entities - a high-level representation of one or more database tables.
Commands - a high-level representation of actions performed on data. Commands are essentially used to configure the business logic of an MES Application.
Signals - a high-level representation of an event occurred within the backend, based on some business logic.
This phase is not part of the invention, and is usually done for creating new SIMATIC® IT UA MOM Application (App) for a MES/MOM system and no modification, with respect to known art is needed to perform the following steps.

When the App Package 104 is generated (commonly through a development step 101, a compiling step 102 and an application creating step 103) e.g. as part of a standard SIMATIC® IT UA development workflow, is processed during a load operation 106 (for example by a SIMATIC® IT UA engineering backend), and also stored as an application model data 105 in a repository 107, for further use. The App Model data file can be used for development of further applications, as shown in phase 100.

Once stored, the model of the loaded application is then exposed via a dedicated web service and can be accessed by different tools, (e.g. including SIMATIC® IT UA Solution Studio, the configuration UI of SIMATIC® IT UA Foundation). A dedicated MDUI Editor (which can, according to an embodiment of the invention, be implemented as part of Solution Studio) can then be used to MDUI Modules 108, preferably by a tool that allows a graphical construction, by exploring the model of every loaded application. A corresponding file, MDUI Manifest 109 is created and can also be stored in the repository.

An UI Application is then generated 110, by assigning 111 one or more MDUI Modules, producing a UI Application Manifest containing the settings and configuration of said UI Application 112, that can also be stored and retrived. The UI Application can then be run 113, and the user interface is displayed upon running.

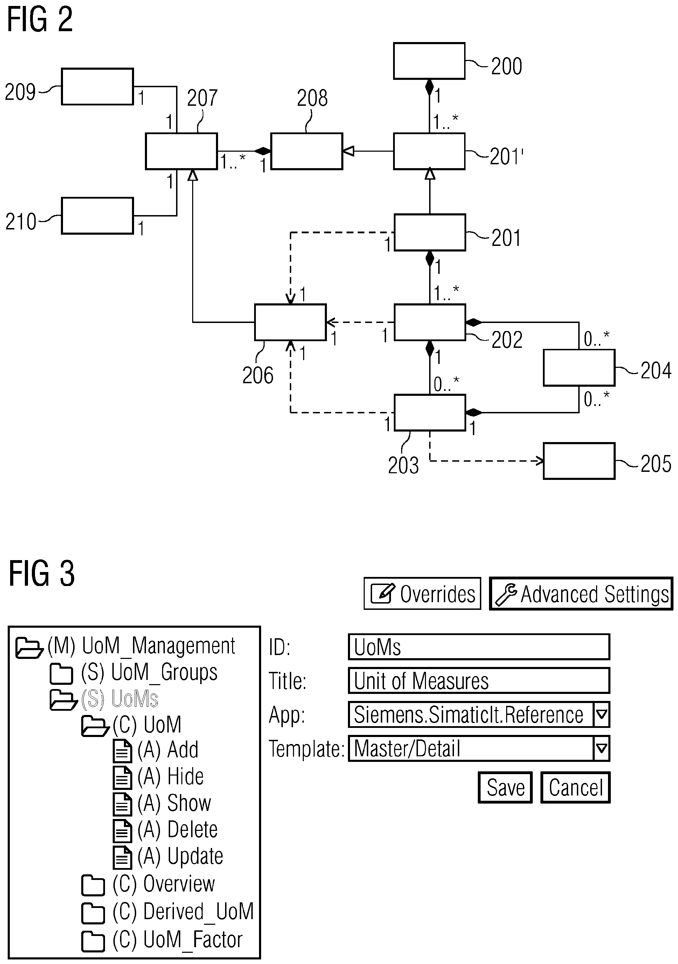

A logical scheme of a MDUI Module is shown in Figure 2

The MDUI Module 200 comprehends one or more MDUI Screens 201, which, when run, generate a UI Screen 201'.
a MDUI Screen comprises one or more Contents 202, which can comprise zero or more actions (options of triggering, by the user, a certain behavior of the application) 203 and one or more Fields 204.

Fields are used: within contents (as properties, i.e. data e.g. contained in a database) or within actions (as parameters, which can also be retrievable from a database). Each Action, as said, is further characterized by a specific Behavior 205.

Model-Driven UI Screens, Contents, and Actions must each be associated to a Blueprint 206, which is a specialization of a View Representation 207. Blueprints can be intended as a sort of templating system to automatically render views at run time based on common UI patterns and the configuration of a given UI artefact, in a way that is totally independent from the data to display in the user interface.

One or more View Representations are associated to a State 208, of the user interface, to which state is a generalization of a UI Screen 201'. To implement a View Representation, Templates 209 can be used and can be chosen by the user, for example from a suitable library. A Controller 210 must also implemented to control the View Representation functionalities.

The MDUI Editor enables the user to create all of the above-mentioned artefacts and associate specific App Model, generated as said above.
According to an embodiment of the invention, one can proceed as follows.

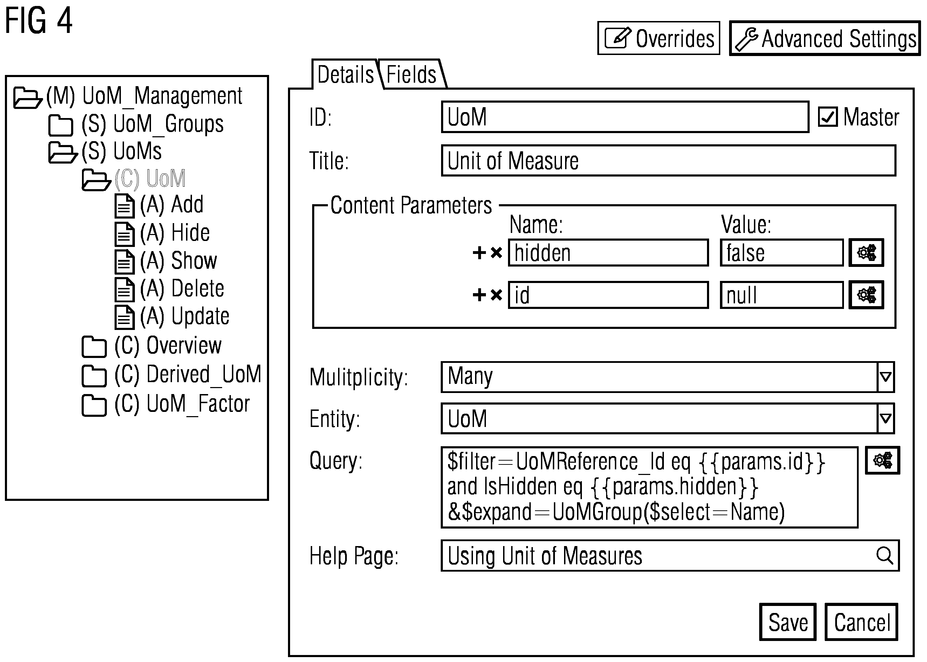

With regard to figures 3 to 8, an UI screen is created (figure 3). When creating the UI Screen, it is necessary to specify one of the loaded MOM Applications (App) which will be used as a base for all the screen contents and actions.
At this stage, it is also possible to specify an initial template, and, based on the selection, the user may be requested to select one or more Entities to populate Contents automatically. The Contents are shown, in the example of the figures on the left part with reference C in brackets.
Each Content is associated to a single Entity, which may have one or more related Entities depending on the App Model. When configuring a Content, it is possible to specify initial parameters, a specific query (which could be specified via a particular syntax, such as OData syntax, like in this example or dedicated query editor) (Figure 4).

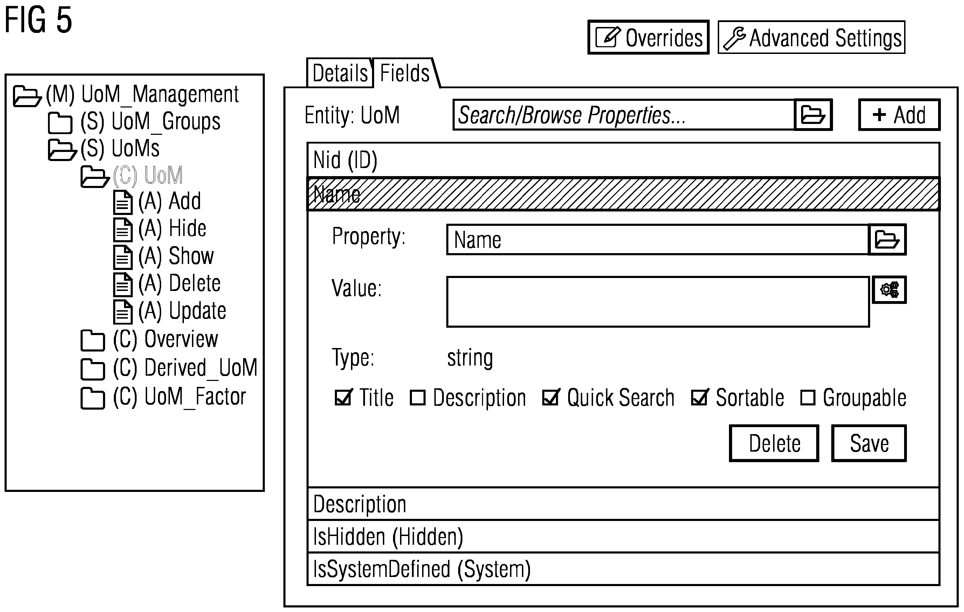

Based on the selected Entity, its properties will be automatically loaded as Content Fields. The user can then decide to remove, add and further modify the configuration of each Field (see figure 5).

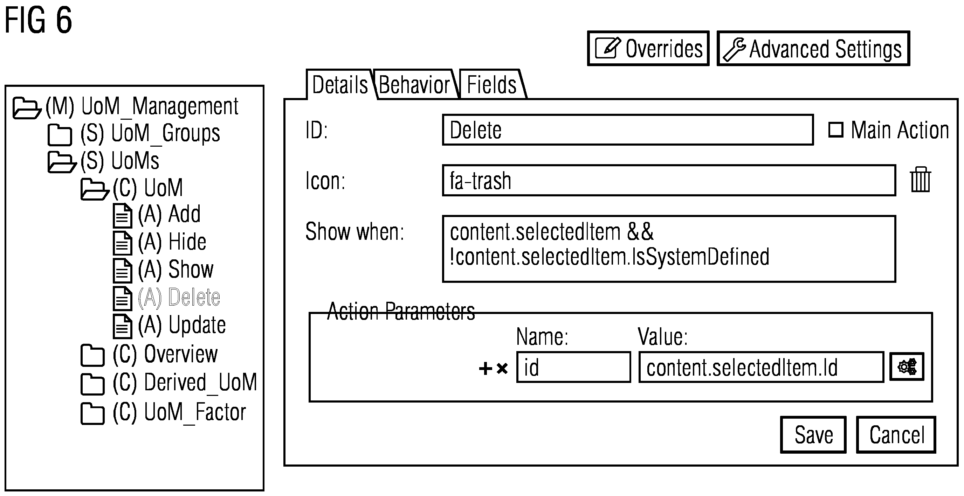

Actions can be added to contents to identify operations that can be performed on data. Some actions may be added automatically when a content is created, depending on whether there are Commands already associated to the specified entity, or they can be configured manually. In figure 6, the Action "delete" has been chosen.
Note that it is possible to configure simple expressions to enable or disable actions - such expressions will be evaluated at run time within the context of the current UI Screen.
When configuring an Action, it is necessary to specify its behavior manually, e.g. from a predefined set of well known behaviors (with a predefined user experience/interaction), such as the following:
- Execute Command
- Execute Command with Confirmation
- Navigate to Screen
- View Item

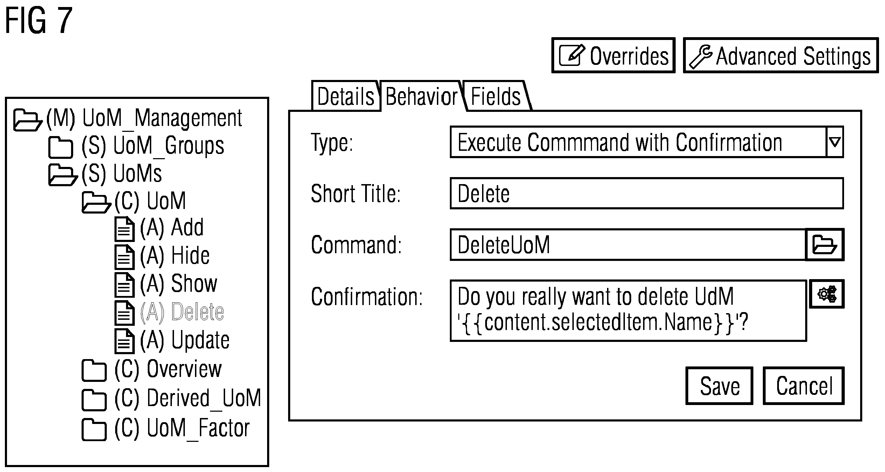

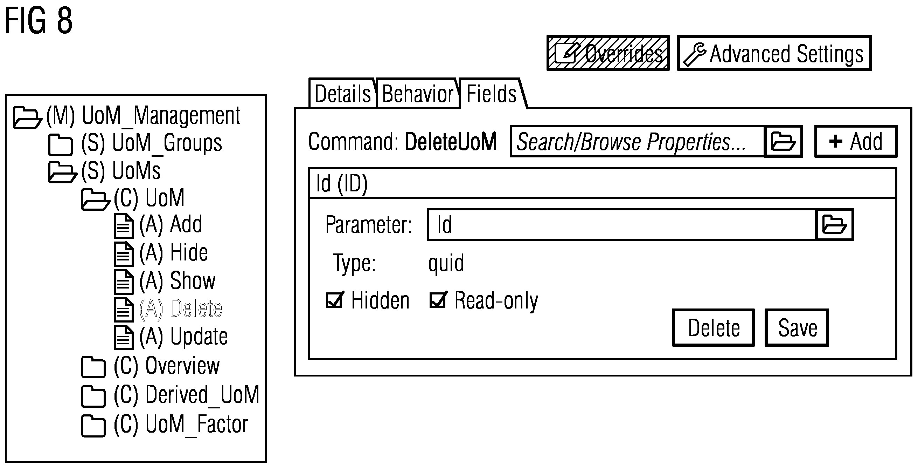

As shown in figures 7 and 8, a dedicated layer appears for that purpose.
Finally, a set of Fields will be retrieved for the Action based on the Command signature that is present in the App Model). Such Fields can still be added, edited or removed by the user.

After configuring a MDUI Module, a dedicated MD UI Module Manifest file will be produced and persisted. Such Manifest file will then be used at run time to render the corresponding MDUI Module.

Note that the majority of the data necessary to create a MDUI Module Manifest is retrieved from App Models - by inspecting the Model at engineering time, the MDUI Editor is able to suggest configurations to the user and validate them for consistency.
Moreover, specific "behaviors" can be defined for data directly in the App Model - such as if an Entity supports versioning, audit trail, or can be frozen, or is inherited from another, etc, - Such behaviors are then translated into specific presentation logic which must be implemented in Blueprints.
Specific APIs may also be provided to: create new Blueprints to create end-user templates for screens, add new Action behaviors.

At run time, the MDUI Module is rendered on-the-fly according to current UX guidelines implemented in the specified Blueprints.
For example, in case of a master detail template the list screen can display the master content on the left, and details on the right, to improve readability. However, any other configuration is possible, if desired. As another example, when actions are triggered, the state of the UI will be changed according to the behavior, e.g. in case of an edit-like behavior ("execute command" or the like). Same behaviors can be applied mutatis mutandis to other Contents.

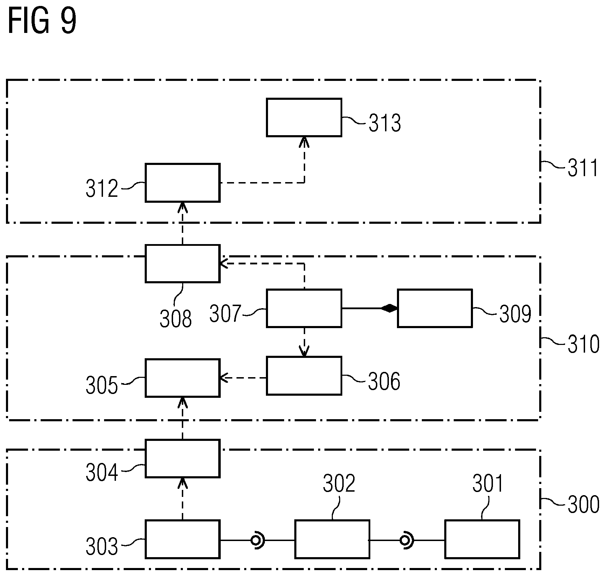

Summing up, a system capable of implementing the method according to an embodiment of the invention is displayed in figure 9.
At a development stage 300, an MES/MOM Application Model 304, such as an application modeling tool 301, (e.g. Project Studio), a compiler 302 (e.g. DSL Compiler) and a plugin 303 for exporting the application (e.g. App Model Export DSL Plugin).

At an engineering stage 310, the Application Model can be stored in a repository 305 and is exposed via a queryable HTTP API; this can happen, according to an embodiment of the invention, by extending an existing Service Layer 306 (e.g. Engineering Service Layer). A preferably graphical user interface MDUI Editor 307to access such API, enable the user to easily configure user interfaces by leveraging application data, and generate a specific MDUI Module Manifest 308 fully describing such user interfaces.
Said MDUI Editor can be integrated in a 309 (e.g. Solution Studio).

At runtime 311 set of client libraries able to process such MDUI Module Manifest and render user interfaces on-the-fly. The MDUI Module Manifest can be preferably in a common serialization format such as JSON: it contains, as said, the complete information on how to generate the portion of user interface (MDUI Module), while, up to now, the latter information is usually contained in a file separated from application and must be written as a code. A dedicated Model-Driven User Interface service 312 can be developed to execute the MD UI Module on the basis of the characteristics of the file, and it renders the user interface elements while executing the program. The service 312 can leverage a Model Driven Data Factory 313, a service to automatically generate services to retrieve data based on the information stored in the Manifest.

By leveraging existing modeling tools already present in the platform, the amount of configuration performed by the user to create a user interface is significantly reduced (instead of having to manually bind data, such bindings are often automatically resolved by inspecting the model).
By exposing the App Model as a queryable HTTP API it is possible to progressively inspect an App Model based on the type of object and their direct relations.
By enabling the user to create "Model-Driven UIs" using a MDUI Editor, it will be possible to implement user interfaces more easily, without requiring any programming knowledge, and much faster than using existing methods (e.g by developing them from scratch using a framework).
This significantly contributes to cut MES/MOM project costs and improve the overall maintainability and upgradability of user interfaces.
It also ensures that user interfaces follow a common user experience, thereby making them "familiar" to the user Additionally, it provides a way to easily extend user interfaces whenever the App Model is extended, without any rework.

By processing a Manifest at run-time instead of generating code at configuration time, it will be possible, in case of platform version upgrades, to automatically update Model-Driven User Interfaces according to the latest runtime changes, without having to regenerate any code or manifest. Additionally, by implementing different blueprints, it is possible to easily render the same Manifest in different ways, according to business needs.

A detailed MES/MOM Model is defined for a "Manufacturing Application", listing entities, commands etc. that will require a user interface. A database schema definition and the definition of a RESTful API to perform operations on data could be used as an alternative to a fully-fledged Model. This is the approach that is most commonly followed by other similar solutions because it is more generic. However, this is also the reason why other solution reach a limit in terms of being able to deliver a sufficiently sophisticated and intuitive UI. Having a rich model allows to better identify the repeatable behaviors that can be translated into repeatable Ul interactions.

According to an embodiment, the App Model is preferably stored in a queryable data store of some form, whose structure is defined, essentially, by a meta-model of the Manufacturing Application. Then the Model is exposed to consumers via a queryable service layer, such as a RESTful API. Instead, it can simply be serialized and made available to consumers all at once. While this would greatly simplify the solution, it may not be optimal for performance reasons in case of large Models, especially if they are meant to be kept in memory or processed by clients.

According to an embodiment, a dedicated model driven UI editor can also be used to define, in a non-graphical but model¬driven way, several different user interfaces (i.e. Model-Driven UI Modules) based on the application Model or one or more Manufacturing Applications. A command-line tool could be provided to generate user interfaces based on the model, and specifying only a few minor customizations, instead of providing a UI to configure model driven UI Modules, as outlined above. Tools that generate code, such as scaffolding utilities, typically follow this approach. Alternatively, it would also be possible to attempt to generate a set of UI Modules dynamically simply by inspecting the Model - provided that the Model is sufficiently detailed.

The definition of MDUI Modules is preferably serialized and stored. Instead of serializing the definition of a MDUI Module into a manifest file, it would also be possible to save this information back into the queryable data store containing the Model itself (as above said). Similarly, it would also be possible to expose the structure of Model-Driven UI Modules via a RESTful API, thereby making the "deployment" of Model-Driven Ul Modules unnecessary and making Uls even more dynamic and self-updating

By using existing facilities to compose UI Modules, MDUI Module definitions can be included and deployed in new or existing web portals ("UI Applications"). Instead of relying on explicit composition of Ul Modules into a Ul Application it would be possible to provide a dynamic portal listing all the Model-Driven UI Modules that have been defined (and that are visible to the user), and allow the user to simply choose which one to load. This would make the proposed solution even more dynamic, allowing the user to explore the Mode] of an MES/MOM Application rendering UIs on-the-fly, on demand.

At run time, a dedicated engine can be used, which is able to process the MDUI Module definitions and render the user interface on-the-fly. As an alternative, it would also be possible to generate code. This would require an additional code generation step at engineering time, but it would also open to the possibility of enabling developers to implement tweaks and customizations directly in the code itself. While this somewhat defeats the point (the primary objective has always been to provide a way to produce user interfaces without writing code), it could be a good compromise in some situations.

### List of reference signs:

- 100: First modelling phase
- 101: Development step
- 102: Compiling step
- 103: Application creating step
- 104: Application Package
- 105: Application model data
- 106: Load operation
- 107: Repository
- 108: Model driven user interface module
- 109: Model driven user interface manifest
- 110: User interface application generation
- 111: Assignation of model driven user interface modules
- 112: User interface application
- 200: Model driven user interface module
- 201: Model driven user interface screen
- 201': User interface screen
- 202: Content
- 203: Action
- 204: Field
- 205: Behavior
- 206: Blueprint
- 207: View representation
- 208: State
- 209: Template
- 210: Controller
- 300: Development stage
- 301: Application modeling tool
- 302: Compiler
- 303: Application model export plugin
- 304: Application model
- 305: Repository
- 306: Service layer
- 307: Model driven user interface editor
- 308: Model driven user interface manifest
- 309: User interface application
- 310: Engineering stage
- 311: Runtime
- 312: Model-driven user Interface service
- 313: Model driven data factory

## Claims

1. Method for generating user interfaces for applications, in particular for a Manufacturing Execution System (MES) or a Manufacturing Operation Management applications, the method comprising:
generating a model driven user interface module (108, 200, 308) (MDUI Module) on the basis of an Application Model, through the creation and configuration of a model driven user interface manifest file (109)(MDUI Manifest) containing all information relating to the functioning of the application and all information necessary to produce a user interface.

2. Method according to claim 1, further comprising generating an user interface application (110) by assigning one or more of said MDUI Models.

3. Method according to claim 1 or 2, wherein said MDUI Module comprises one or more model driven user interface Screens(201, 201'), which comprise a series of contents(202), which comprise one or more Actions (203) and Fields (204).

4. Method according to any of the preceding claims, wherein the creation of the model driven user interface module is performed by means of a dedicated model driven user interface editor (307), capable of exploring the Application Model and enabling users to create and configure user interfaces based on said application model, in the form of layout independent information.

5. Method, according to any of the preceding claims, further comprising the assignation of a blueprint used to provide a data-agnostic visual representation of said model driven user interface screens, said actions and said contents.

6. Method, according to claim 5, wherein the model driven user interface module is run by a runtime library capable of processing said UI structure together with said blueprints to render a user interface on-the-fly when requested by the user.

7. Method, according to claim 5, wherein the model driven user interface module is run by a code generator able to generate all required artefact to produce a user interface.
